# EUROPEAN PATENT SPECIFICATION

(11) **EP 3 091 505 B1**
(45) Date of publication and mention of the grant of the patent: **07.08.2019**
(21) Application number: 16168498.0
(22) Date of filing: 05.05.2016
(51) Int. Cl.: G06T 5/00, G06T 5/40

(54) **IMAGE PROCESSOR, ELECTRON MICROSCOPE, AND IMAGE PROCESSING METHOD**
BILDPROZESSOR, ELEKTRONENMIKROSKOP UND BILDVERARBEITUNGSVERFAHREN
PROCESSEUR D'IMAGE, MICROSCOPE ÉLECTRONIQUE ET PROCÉDÉ DE TRAITEMENT D'IMAGE

(30) Priority: 08.05.2015 JP 2015095781
(43) Date of publication of application: 09.11.2016
(73) Proprietor: JEOL LTD., Akishima, Tokyo 196-8558 (JP)
(72) Inventor: SAGAWA, Ryusuke, Akishima, Tokyo 196-8558 (JP)
(74) Representative: Boult Wade Tennant LLP

(56) References cited:
- EP-A1- 1 887 517
- EP-A2- 1 492 052
- US-A1- 2010 080 459
- DOUGLAS M A ET AL: "AN INTRODUCTION TO IMAGE PROCESSING IN MEDICAL MICROSCOPY", MEDICAL PROGRESS THROUGH TECHNOLOGY, SPRINGER VERLAG. BERLIN, DE, vol. 15, no. 3/04, January 1989 (1989-01), pages 109-140, XP000067856, ISSN: 0047-6552

## Description

### BACKGROUND OF THE INVENTION

### 1. Field of the Invention

The present invention relates to an image processor, electron microscope, and image processing method.

### 2. Description of the Related Art

In recent years, in the field of transmission electron microscopy (TEM), transmission electron microscope (TEM) images have been captured using digital cameras (see, for example, patent document 1). Where TEM images are captured using a digital camera, if the images are displayed on a monitor without being adjusted in terms of contrast, they are displayed with low contrast in many cases.

Therefore, in a conventional transmission electron microscope, a histogram is created from a captured electron microscope image that is a digital image. Brightness values are plotted on the horizontal axis of the histogram. The numbers (frequencies) of images are plotted on the vertical axis for each brightness value. A minimum brightness value and a maximum brightness value are detected out of the brightness values excluding brightness values of zero frequency. These minimum and maximum brightness values are related to the minimum and maximum brightness values on the monitor, thus enhancing the contrast of the displayed object under observation.

### Citation List

### Patent Documents

Patent document 1: JP-A-2010-232002

However, if the object under observation and a different structure producing a large brightness difference with the observed object come into the field of view simultaneously, the above-described conventional method presents the problem that the object under observation will be displayed with low contrast. In this case, a peak arising from the object under observation and a peak arising from the undesired structure both exist in the histogram. Consequently, the minimum and maximum brightness values of the histogram do not correspond to the minimum and maximum brightness values of the peak arising from the object under observation. This lowers the contrast of the displayed object under observation.

For example, in transmission electron microscopy, in order to hold an ultrathin sample having a thickness on the order of nanometers in a vacuum, the ultrathin sample may be placed on a sample holding grid for observation of the sample. Since the sample holding grid hardly transmits electrons, when the sample and grid are photographed by a digital camera, the grid is detected as having a brightness value much lower than that of the ultrathin sample. When samples are observed at low magnifications, the sample holding grid often enters the field of view, in which case the object under observation is displayed with low contrast for the above-described cause.

In this way, in order to appropriately adjust the contrast of an object under observation contained in a transmission electron microscope image in which the field of view also contains a structure not of interest, processing is needed, for example, to identify the peak in the image histogram arising from the object under observation. However, if the sample is irradiated with an intense electron beam, the number of bins (elements) of the histogram obtained from a TEM image increases. This raises the problem that it takes longer to adjust the contrast.

Recently, the numbers of pixels and frame rates of available digital cameras have increased at an amazing rate and so image processing is required to be performed at higher speeds. In transmission electron microscopy, when a desired field of view is searched for to find a field of view to be captured, it is necessary to adjust the contrast of a sequence of images taken successively during an observation. Hence, there is a need for faster image processing.

US2010080459 (A1) discloses techniques for performing content adaptive histogram enhancement in which a frame of digital image data, e.g., digital video data or digital still image data, is classified into one of a plurality of content classes based on histogram of pixel intensity values of the frame.

EP1887517 (A1) discloses a process for enhancing contrast of an image having pixels in different brightness intensities.

EP1492052 (A2) discloses a method for enhancing the contrast of video pictures in which a histogram for luminance values of pixels in the window is calculated.

DOUGLAS M A ET AL, "An Introduction To Image Processing In Medical Microscopy", Medical Progress Through Technology, SPRINGER VERLAG. BERLIN, DE, (198901), vol. 15, no. 3/04, ISSN 0047-6552, pages 109 - 140 discloses an overview of image processing in medical microscopy.

### SUMMARY OF THE INVENTION

In view of the foregoing problem, the present invention has been made. It would be desirable to provide an apparatus and method of image processing capable of achieving faster image processing. It would be further desirable to provide an electron microscope including such an apparatus of image processing.

According to the present invention, there is provided an image processor as set out in claim 1, an electron microscope as set out in claim 3 and an image processing method as set out in claim 4.

Further aspects associated with the invention are listed below:
(1) An image processor associated with the present invention comprises: an image acquisition section for obtaining an image; a histogram generating section for generating a histogram representative of a distribution of brightness values of pixels of the image from the image; a binning processing section for binning the histogram on the basis of a maximum one of the brightness values of the image; and a contrast adjusting section for adjusting the contrast of the image on the basis of the binned histogram.
   In this image processor, the histogram is binned. Therefore, the image contrast can be adjusted based on the histogram having a less number of bins (elements) as compared with the case where the histogram is not binned. Consequently, image processing can be performed at higher speed.
(2) In one feature of this image processor, the binning processing section may perform an operation for combining any adjacent ones of the bins of the histogram into one bin and repeat this operation as many times as determined based on the maximum brightness value of the image.
   In this image processor, the operation for combining any adjacent ones of the bins of the histogram into one bin is repeated as many times as determined based on the maximum brightness value of the image. Therefore, the number of the bins (elements) of the histogram can be reduced to a desired number of bins (elements).
(3) In one feature of any one of (1) and (2) above, the contrast adjusting section may adjust the contrast of the image by finding the number of peaks present in the binned histogram and excluding from the binned histogram those of the peaks that are less than a threshold value calculated based on the maximum brightness value of the image provided that the number of the peaks is 2 or more.
   In this image processor, the contrast of the image is adjusted while excluding from the histogram those of the peaks that are less than a threshold value calculated based on the maximum brightness value of the image. Therefore, if the object under observation and a different structure or morphology both enter the field of view, the object under observation can be prevented from being displayed with low contrast. Hence, the object under observation can be displayed with appropriate contrast.
(4) In one feature of this image processor of (3), the contrast adjusting section may calculate the threshold value by multiplying the maximum brightness value of the image by a given coefficient.
   In this image processor, the threshold value is computed by multiplying the maximum brightness value of the image by a given coefficient. Therefore, the threshold value can be calculated easily as described later. Furthermore, using the threshold value, peaks arising from structures and morphologies other than the object under observation can be excluded from the histogram reliably.
(5) In one feature of any one of (1)-(4) above, the image may be a transmission electron microscope image.
(6) An image processor associated with the present invention comprises: an image acquisition section for obtaining an image; a histogram generating section for generating from the image a histogram representative of a distribution of brightness values of pixels of the image; and a contrast adjusting section for adjusting the contrast of the image on the basis of the histogram. The contrast adjusting section adjusts the contrast of the image by finding the number of peaks present in the histogram and excluding from the histogram those of the peaks that are less than a threshold value calculated based on a maximum one of the brightness values of the image provided that the number of the peaks is 2 or more.
   In this image processor, the contrast of the image is adjusted while excluding peaks less than the threshold value calculated based on the maximum brightness value of the image from the histogram. Therefore, if the object under observation and structures not of interest enter the field of view, the object under observation can be prevented from being displayed with low contrast. Consequently, the object under observation can be displayed with appropriate contrast.
(7) Another image processor associated with the present invention comprises: an image acquisition section for obtaining an image; a histogram generating section for generating from the image a histogram representative of a distribution of brightness values of pixels of the image; and a contrast adjusting section for excluding from the histogram subthreshold brightness values less than a threshold value calculated based on a maximum one of the brightness values of the image and adjusting the contrast of the image on the basis of the histogram from which the subthreshold brightness values have been excluded.
   In this image processor, subthreshold brightness values less than the threshold value calculated based on the maximum brightness value of the image are excluded from the histogram. The contrast of the image is adjusted based on the histogram from which the subthreshold brightness values have been excluded. Therefore, if the object under observation and structures or morphologies other than the object under observation enter the field of view, the object under observation can be prevented from being displayed with low contrast. Hence, the object under observation can be displayed with appropriate contrast.
(8) In one feature of any one of (6) and (7) above, the contrast adjusting section may calculate the threshold value by multiplying the maximum brightness value of the image by a given coefficient.
(9) In one feature of any one of (6)-(8) above, there may be further provided a binning processing section for binning the histogram on the basis of the maximum brightness value of the image.
   In this image processor, the histogram is binned and, therefore, the contrast of the image can be adjusted based on the histogram having a less number of bins (elements) as compared with the case where the histogram is not binned. Consequently, image processing can be performed at higher rate.
(10) In one feature of this image processor, the image may be a transmission electron microscope image.
(11) An electron microscope associated with the present invention includes an image processor associated with the present invention.
   This electron microscope can include an image processor associated with the present invention.
(12) An image processing method associated with the present invention comprises the steps of: obtaining an image; generating from the image a histogram representative of a distribution of brightness values of pixels of the image; binning the histogram on the basis of a maximum one of the brightness values of the image; and adjusting the contrast of the image on the basis of the binned histogram.
   In this image processing method, the histogram is binned and so the contrast of the image can be adjusted on the basis of the histogram having a less number of bins (elements) as compared with the case where the histogram is not binned. As a consequence, image processing can be implemented at higher speed.
(13) Another image processing method associated with the present invention comprises the steps of: obtaining an image; generating from the image a histogram representative of a distribution of brightness values of pixels of the image; and adjusting the contrast of the image on the basis of the histogram. The step of adjusting the contrast involves the steps of: finding the number of peaks present in the histogram; and, if the number of the peaks is 2 or more, excluding from the histogram those of the peaks that are less than a threshold value calculated based on a maximum one of the brightness values of the image and adjusting the contrast of the image.
   In this image processing method, the contrast of the image is adjusted while excluding from the histogram those of the peaks that are less than a threshold value calculated based on the maximum brightness value of the image. Therefore, if an object under observation and structures or morphologies other than the object under observation enter the field of view, the object under observation can be prevented from being displayed with low contrast. Hence, the object under observation can be displayed with appropriate contrast.
(14) A further image processing method associated with the present invention comprises the steps of: obtaining an image; generating from the image a histogram representative of a distribution of brightness values of pixels of the image; and excluding from the histogram those brightness values thare are less than a threshold value calculated on the basis of a maximum one of the brightness values of the image to thereby produce a modified histogram and adjusting the contrast of the image on the basis of the modified histogram.

In this method of image processing, brightness values less than a threshold value calculated based on the maximum value of the image are excluded from the histogram, thus producing a modified histogram. The contrast of the image is adjusted on the basis of the modified histogram. Therefore, if the object under observation and structures other than the object under observation all enter the field of view, the object under observation can be prevented from being shown with low contrast. Consequently, the object under observation can be displayed with appropriate contrast.

### BRIEF DESCRIPTION OF THE DRAWINGS

FIG. 1 is a schematic representation, partly in block form, of an electron microscope including an image processor associated with one embodiment of the present invention.
FIG. 2 is a flowchart illustrating one example of image processing performed by the image processor shown in FIG. 1.
FIG. 3A is a TEM image containing only an object of interest under observation within a field of view.
FIG. 3B is a brightness histogram of the TEM image shown in FIG. 3A.
FIG. 4A is a TEM image having a field of view in which an object of interest under observation and other structures are contained.
FIG. 4B is a brightness histogram of the TEM image shown in FIG. 4A.
FIG. 5A is a TEM image having the same field of view as that of the TEM image of FIG. 4A.
FIG. 5B is a brightness histogram of the TEM image of FIG. 5A.
FIG. 6A is a TEM image having a field of view in which an object of interest under observation and other structures are contained.
FIG. 6B is a brightness histogram of the TEM image of FIG. 6A.
FIG. 7A is a TEM image having the same field of view as that of the TEM image of FIG. 6A.
FIG. 7B is a brightness histogram of the TEM image of FIG. 7A.
FIG. 8 is a flowchart illustrating a modification of the image processing illustrated in FIG. 2.

### DETAILED DESCRIPTION OF THE INVENTION

The preferred embodiments of the present invention are hereinafter described in detail with reference to the drawings. It is to be understood that the embodiments described below are not intended to unduly restrict the content of the present invention delineated by the claims and that not all the configurations described below are essential constituent components of the invention.

### 1. Image Processor and Electron Microscope

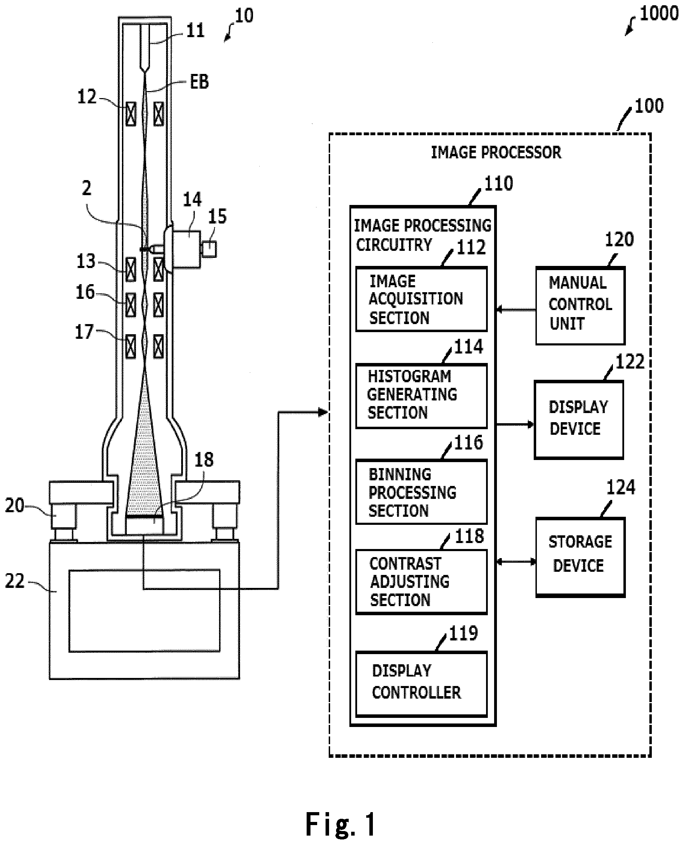

An electron microscope including an image processor associated with one embodiment of the present invention is first described by referring to FIG. 1, which schematically shows the configuration of the electron microscope, 1000, including the image processor, 100, associated with the present embodiment.

The electron microscope 1000 is a transmission electron microscope. That is, the electron microscope 1000 is an instrument for obtaining a transmission electron microscope (TEM) image by imaging electrons transmitted through a sample 2.

As shown in FIG. 1, the electron microscope 1000 includes a microscope body 10 and the image processor 100. The microscope body 10 includes an electron beam source 11, condenser lenses 12, an objective lens 13, a sample stage 14, a sample holder 15, an intermediate lens 16, a projector lens 17, and an imager 18 (such as a digital camera).

The electron beam source 11 emits an electron beam EB. The electron beam source 11 emits the electron beam EB by accelerating electrons, which are emitted from a cathode, by means of an anode. An electron gun, for example, can be used as the electron beam source 11. No restriction is imposed on the electron gun used as the electron beam source 11. For example, a thermionic-emission electron gun, thermal field-emission electron gun, or cold field-emission electron gun can be used.

The condenser lenses 12 are disposed behind (i.e., on the downstream side relative to the direction of travel of the electron beam EB) the electron beam source 11. The condenser lenses 12 operate to focus the electron beam EB generated by the electron beam source 11 so that the beam EB impinges on the sample 2.

The objective lens 13 is located behind the condenser lenses 12. The objective lens 13 is an initial stage of lens for focusing the electron beam EB transmitted through the sample 2. The objective lens 13 has a top polepiece and a bottom polepiece (none of which are shown). The objective lens 13 focuses the electron beam EB by producing a magnetic field between the top and bottom polepieces.

The sample stage 14 holds the sample 2. In the illustrated example, the sample stage 14 holds the sample 2 via the sample holder 15. The sample stage 14 places the sample 2, for example, between the top and bottom polepieces of the objective lens 13. The sample stage 14 can place the sample 2 in position by moving and stopping the sample holder 15. The sample stage 14 can move the sample 2 in a horizontal direction perpendicular to the direction of travel of the electron beam EB and in a vertical direction along the direction of travel of the electron beam EB. Furthermore, the sample stage 14 can tilt the sample 2.

The intermediate lens 16 is located behind the objective lens 13. The projector lens 17 is positioned behind the intermediate lens 16. The intermediate lens 16 and projector lens 17 cooperate to further magnify the image focused by the objective lens 13 and to bring the further magnified image into focus on the imager 18. In the electron microscope 1000, an imaging system is constituted by the objective lens 13, intermediate lens 16, and projector lens 17.

The imager 18 captures the TEM image focused by the imaging system. For example, the imager 18 is a digital camera such as a CCD camera or CMOS camera. The imager 18 can obtain the TEM image as a digital image. Image data on the TEM image captured by the imager 18 is output to the image processor 100. In the illustrated example, the microscope body 10 is mounted over a pedestal 22 via vibration isolators 20.

The image processor 100 performs processing to obtain the TEM image (i.e., image data) captured by the microscope body 10 and to display the TEM image on a display device 122 while adjusting the contrast of the image. The image processor 100 includes image processing circuitry 110, a manual control unit 120, the display device 122, and a storage device 124.

The manual control unit 120 performs processing to derive a control signal responsive to a user's operation or manipulation to send the signal to the image processing circuitry 110. The functions of the manual control unit 120 can be implemented, for example, by buttons, keys, a touch panel display, or a microphone.

The display device 122 displays images generated by the signal processing circuitry 110. The function of the display device 122 can be implemented by an LCD, a CRT, or the like. The display device 122 displays, for example, a TEM image whose contrast has been adjusted by the image processing circuitry 110.

The storage device 124 stores programs, data, and related information permitting the image processing circuitry 110 to perform various kinds of computations and control operations. The storage device 124 is also used as a working area for the image processing circuitry 110. Furthermore, the storage device 124 is used to temporarily store the results of computations performed by the image processing circuitry 110 in accordance with various programs. The function of the storage device 124 can be implemented by a hard disk, a RAM, or the like.

The image processing circuitry 110 performs processing to obtain TEM images, and effects image processing and other operations. The functions of the processing circuitry 110 can be implemented either by hardware such as various processors (e.g., CPU and DSP) or by software. The image processing circuitry 110 includes an image acquisition section 112, a histogram generating section 114, a binning processing section 116, a contrast adjusting section 118, and a display controller 119.

The image acquisition section 112 obtains a TEM image on the basis of image information delivered from the imager 18.

The histogram generating section 114 generates a histogram representing a distribution of the brightness values of pixels of the TEM image from the TEM image obtained by the image acquisition section 112. In the histogram, brightness values are plotted on the horizontal axis, while the numbers (frequencies) of the pixels possessing such brightness values are plotted on the vertical axis. The histogram is herein referred to as the brightness histogram.

The histogram generating section 114 constructs a brightness histogram responsive to a maximum brightness value of the TEM image that is a maximum one of the brightness values of the pixels making up the image. The number of elements (i.e., the number of bins) of the brightness histogram corresponds to the maximum brightness value of the TEM image. For example, where the maximum brightness value of the TEM image is 40,000, the histogram generating section 114 produces a brightness histogram having 40,000 elements (bins).

The binning processing section 116 bins the brightness histogram formed by the histogram generating section 114, on the basis of the maximum brightness value of the TEM image. In particular, the binning processing section 116 combines any adjacent ones of the bins of the histogram into one bin, thus reducing the number of bins (elements) of the histogram. When plural bins are combined into one bin, the average value of the frequency values of the plural pins is used as the frequency value of the resultant bin. Alternatively, the sum of the frequency values of these plural bins may be used.

In a brightness histogram, a maximum brightness value of an image corresponds to the number of bins of the histogram as described previously. Therefore, the binning processing section 116 performs a binning process on the basis of the maximum brightness value of a TEM image such that the number of bins of the brightness histogram is less than a given number (target number of bins), in order to facilitate the processing done by the contrast adjusting section 118 described later. The target number of bins is appropriately set according to a required processing speed. Information about the target number of bins is previously stored, for example, in the storage device 124.

Specifically, the binning processing section 116 performs an operation to combine any adjacent ones (e.g., two) of bins of a brightness histogram, and repeats this operation as many times as determined based on the maximum brightness value of the TEM image. This number of repetition is so set that the number of bins of the binned brightness histogram is less than the aforementioned target number of bins. The number of repetition determined based on the maximum brightness value of the TEM image is hereinafter referred to also as the "binning coefficient".

For example, where the maximum brightness value of the TEM image (i.e., the number of pins of the brightness histogram) is 40,000 and the target number of bins is 5,000, the binning processing section 116 sets the binning coefficient to 3, repeats the operation for combining 2 bins into 1 bin three times, and sets the number of bins of the brightness histogram to 5,000.

The contrast adjusting section 118 performs processing to adjust the contrast of the TEM image on the basis of the brightness histogram binned by the binning processing section 116. The processing performed by the contrast adjusting section 118 is described below.

The contrast adjusting section 118 performs processing to remove noise from the binned brightness histogram by a well-known technique and then identifies the positions of peaks present in the brightness histogram. The identification of the positions of the peaks is carried out, for example, by taking a first-order differential and a second-order differential of the brightness histogram from which the noise has been removed, thus finding a position (brightness value) where the first-order differential is zero and the second-order differential is negative. This found position (brightness value) is taken as a peak position.

Then, the contrast adjusting section 118 calculates the number of peaks (number of the positions of peaks) in the brightness histogram. If the number of peaks is not less than 1 (i.e., the number of peaks is 2 or more), the contrast adjusting section 118 excludes from the brightness histogram those of the peaks that are less than a threshold value computed based on a maximum brightness value of the TEM image, and adjusts the contrast of the TEM image. At this time, the contrast adjusting section 118 calculates the threshold value by multiplying the maximum brightness value of the TEM image by a given coefficient. This threshold value is used to exclude peaks arising from structures and morphologies other than the object under observation from the brightness histogram. One example of such structures and morphologies is a sample holding member such as a sample holding grid for holding a sample.

In transmission electron microscopy, when an observation is made while holding a sample (an object of interest under observation) on a sample holding grid, the sample is thinned into a ultrathin film and transmits the electron beam. On the other hand, the sample holding grid that holds a sample hardly transmits the electron beam. Therefore, if these are contained in the field of view, two independent peaks appear in the brightness histogram of the TEM image. At this time, the ratio (P2/P1) of the brightness value P2 of the peak arising from the sample holding grid to the brightness value P1 of the peak arising from the sample is substantially constant irrespective of the conditions of the sample (such as thickness and constituent elements) or the observational conditions (such as the dose of the electron beam current hitting the sample) because the transmissivity of the sample holding grid relative to the electron beam is less than 1% and much smaller than that (more than 99%) of the sample relative to the electron beam. In this way, the ratio P2/P1 is nearly constant and so a threshold value used to separate peaks arising from the sample from peaks arising from the sample holding grid can be computed irrespective of the conditions of the sample or the observational conditions by multiplying the maximum brightness value of the TEM image by a given coefficient. That is, the given coefficient can be set based on the ratio P2/P1.

When the contrast of the TEM image is adjusted based on the brightness histogram from which subthreshold peaks have been excluded, for example, the contrast adjusting section 118 reads values (frequency values) off the vertical axis toward both directions of the horizontal axis of the brightness histogram from the position of the peak not excluded from the histogram (i.e., the peak arising from the object under observation) and takes the positions of values on the vertical axis at which a certain threshold value is no longer reached as a minimum brightness value of the peak arising from the object under observation and as a maximum brightness value of peak, respectively. The threshold value is a preset arbitrary value. The contrast of the TEM image is adjusted while relating the minimum brightness value of the peak arising from the object under observation and the maximum brightness value of peak to a minimum brightness value and a maximum brightness value, respectively, on the display device 122.

In this way, values are read off from the peak position toward both directions of the horizontal axis of the brightness histogram. The positions of values on the vertical axis at which a certain threshold value is no longer reached are taken as a minimum brightness value of peak and as a maximum brightness value of peak, respectively. Therefore, if plural peaks originating from the object under observation overlap, for example, a whole waveform consisting of these peaks can be contained between the minimum and maximum brightness values of peak. Consequently, if plural peaks overlap, the contrast of the TEM image can be adjusted appropriately.

On the other hand, if the number of peaks is 1 or less, i.e., 1 or 0, the contrast adjusting section 118 relates the minimum and maximum brightness values of the brightness values of the brightness histogram excluding values of zero frequency to the minimum and maximum brightness values, respectively, on the display device 122 and adjusts the contrast of the TEM image.

The display controller 119 provides control such that the TEM image whose contrast has been adjusted by the contrast adjusting section 118 is displayed on the display device 122.

### 2. Image Processing Method

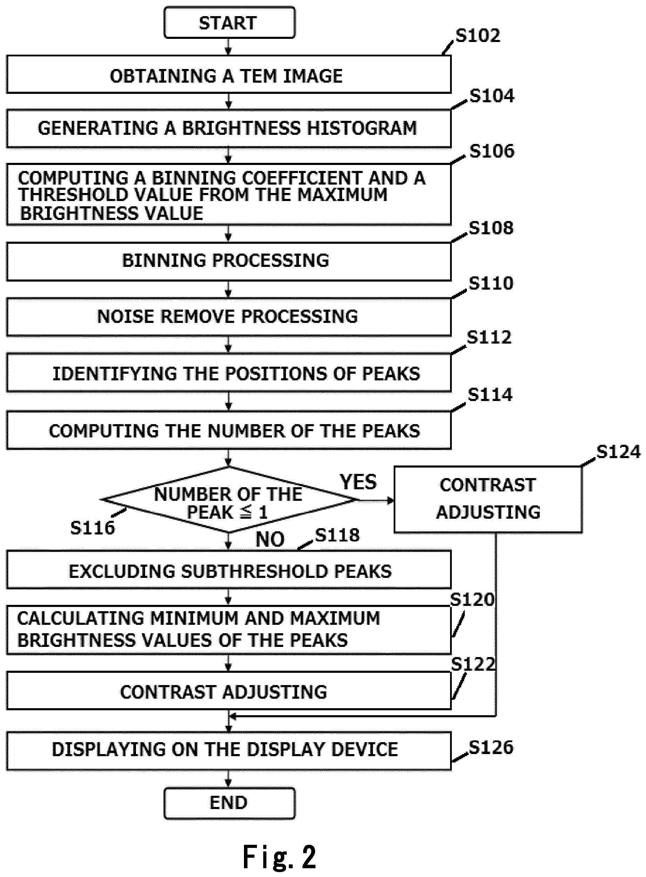

An image processing method implemented in the image processor associated with the present embodiment is next described. FIG. 2 is a flowchart illustrating one example of image processing performed in the image processor 100 associated with the present embodiment.

First, the image acquisition section 112 obtains a TEM image captured by the electron microscope body 10 (step S102).

Then, the histogram generating section 114 generates a brightness histogram (step S104).

The binning processing section 116 then determines a binning coefficient from the maximum brightness value of the TEM image. The contrast adjusting section 118 computes a threshold value from the maximum brightness value of the TEM image, the threshold value being used to exclude peaks arising from structures and morphologies other than the object under observation (step S106).

The binning processing section 116 then performs a binning process on the basis of the maximum brightness value of the TEM image (step S108). The binning processing section 116 performs an operation to combine any two adjacent bins of the brightness histogram into one bin, and repeats this operation as many times (corresponding to the binning coefficient) as determined based on the maximum brightness value of the TEM image. In consequence, the number of bins (elements) of the brightness histogram becomes less than a preset target number of bins.

The contrast adjusting section 118 then adjusts the contrast of the TEM image on the basis of the binned brightness histogram (steps S108-S124).

First, the contrast adjusting section 118 performs processing to remove noise from the binned brightness histogram (step S110).

Then, the contrast adjusting section 118 performs processing to identify the positions of peaks present in the brightness histogram (step S112).

The contrast adjusting section 118 then computes the number of the peaks present in the brightness histogram (step S114). If the decision at step S116 is negative (NO), indicating that the number of the peaks is not equal to 1 or less, the contrast adjusting section 118 excludes subthreshold peaks found at step S106 from the brightness histogram (step S118), calculates minimum and maximum brightness values of the peaks (step S120), and adjusts the contrast of the TEM image while relating the calculated minimum and maximum brightness values of the peaks to the minimum and maximum brightness values on the display device 122 (step S122).

On the other hand, if the number of the peaks is 1 or less (i.e., the decision at step S116 is affirmative (YES)), the contrast adjusting section 118 adjusts the contrast of the TEM image while matching the minimum and maximum ones of the brightness values of the brightness histogram excluding brightness values of zero frequency to the minimum and maximum brightness values on the display device 122 (step S124).

The display controller 119 then provides control such that the TEM image whose contrast has been adjusted by the contrast adjusting section 118 is displayed on the display device 122 (step S126).

Because of the processing sequence described so far, the TEM image captured by the electron microscope body 10 can be adjusted in terms of contrast and displayed on the display device 122.

The image processor 100 has the following features. The image processor 100 generates a brightness histogram representing a distribution of the brightness values of pixels from the TEM image that the histogram generating section 114 has obtained. The binning processing section 116 bins the brightness histogram on the basis of the maximum brightness value of the TEM image. The contrast adjusting section 118 adjusts the contrast of the TEM image, based on the binned brightness histogram. In this way, in the image processor 100, the brightness histogram is binned. Therefore, the contrast of the TEM image can be adjusted on the basis of the brightness histogram having a less number of bins (elements) as compared with the case where the brightness histogram is not binned. Consequently, the image processor 100 can perform image processing at higher speed.

For example, in the above embodiment, when the positions of peaks of the brightness histogram are identified, first-order and second-order differentials of the histogram are taken. At this time, the histogram is convolved. The number of convolution operations can be reduced because the number of bins (elements) of the brightness histogram is reduced by performing a binning process. Hence, the processing can be facilitated.

In the image processor 100, the binning processing section 116 performs an operation to combine any adjacent ones of the bins of the brightness histogram into one bin, and repeats this operation as many times as determined based on the maximum brightness value of the TEM image. The number of bins of the brightness histogram generated by the histogram generating section 114 is equal to the maximum brightness value of the TEM image. Therefore, the number of the bins of the brightness histogram can be brought equal to a desired number by repeating the operation of combining any adjacent ones of the brightness histogram into one bin as many times as determined based on the maximum brightness value of the TEM image.

In the image processor 100, the contrast adjusting section 118 performs the operation consisting of finding the number of peaks present in the binned brightness histogram and the operation consisting of excluding peaks less than the threshold value calculated based on the maximum brightness value of the TEM image from the binned brightness histogram, if the number of peaks present in the brightness histogram is two or more, and adjusting the contrast of the TEM image. Therefore, if the object under observation and structures and morphologies other than the object under observation enter the field of view, the object under observation can be prevented from being displayed with low contrast. Thus, the object under observation can be displayed with appropriate contrast.

In the image processor 100, the contrast adjusting section 118 calculates a threshold value for removing peaks arising from structures and morphologies other than the object under observation from the brightness histogram by multiplying the maximum brightness value of the TEM image by a given coefficient. As described previously, in a brightness histogram of a TEM image, the ratio (P2/P1) of the brightness value P2 of a peak arising from the sample holding grid to the brightness value P1 of a peak arising from an object under observation is substantially constant irrespective of the conditions of the sample or observational conditions. Therefore, the threshold value can be computed easily by multiplying the maximum brightness value of the TEM image by a given coefficient so as to determine the threshold value. Using the threshold value, peaks originating from structures and morphologies other than the object under observation can be certainly removed from the brightness histogram.

Since the electron microscope 1000 includes the image processor 100, the processing for adjusting the contrast of the TEM image can be performed at high speed. Therefore, when a field of view adapted to be captured is searched for, for example, the electron microscope 1000 can adjust the contrast of a series of images obtained in succession during observation. As a consequence, TEM images whose contrast has been adjusted can be displayed on the display device 122 in real time.

The image processing method associated with the present embodiment comprises the steps of: obtaining a TEM image; generating a brightness histogram representative of a distribution of brightness values of pixels from the obtained TEM image; binning the brightness histogram on the basis of a maximum one of the brightness values of the TEM image; and adjusting the contrast of the TEM image on the basis of the binned brightness histogram. In this way, in the image processing method associated with the present embodiment, the brightness histogram is binned. Therefore, the contrast of the TEM image can be adjusted on the basis of the brightness histogram having a less number of bins (elements) as compared with the case where the brightness histogram is not binned. Consequently, image processing can be performed at higher speed.

In the image processing method associated with the present embodiment, the contrast adjusting step involves the steps of: finding the number of peaks present in the brightness histogram; excluding from the brightness histogram peaks less than a threshold value calculated based on a maximum brightness value of the TEM image provided that the number of the peaks is 2 or more; and adjusting the contrast of the TEM image. Therefore, if the object under observation and structures and morphologies other than the object under observation all enter the field of view, the object under observation can be prevented from being displayed with low contrast. Consequently, the object under observation can be displayed with appropriate contrast.

### 3. Experimental Example

An experimental example is given below, and the present invention is described in further detail. Note that the present invention is in no way restricted by the following experimental example.

In a first case, minimum and maximum brightness values of a brightness histogram (i.e., minimum and maximum brightness values of a TEM image) were related to minimum and maximum brightness values on the display device, and the contrast was adjusted. In a second case, minimum and maximum brightness values of a peak arising from an object of interest under observation were related to the minimum and maximum brightness values of the display device, and contrast was adjusted. These two cases were compared.

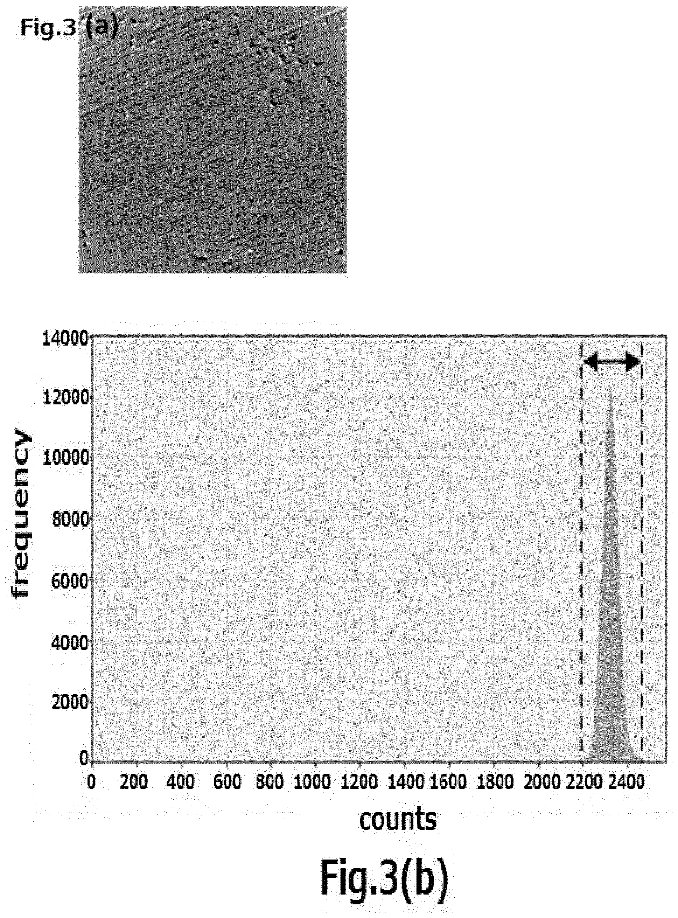

FIG. 3A is a TEM image having a field of view containing only the object of interest under observation. In the TEM image of FIG. 3A, the contrast was adjusted while relating the minimum and maximum brightness values of the brightness histogram to the minimum and maximum brightness values on the display device. FIG. 3B is a brightness histogram of the TEM image shown in FIG. 3A. The region of the brightness histogram of FIG. 3B that is between the broken lines corresponds to the contrast of the TEM image shown in FIG. 3A.

In the TEM image shown in FIG. 3A, a grid-like pattern and many black points indicating the object of interest under observation are clearly discernible.

As shown in FIG. 3B, in the brightness histogram, there is one peak near a brightness value of 2,250 counts. This peak arises from the object of interest under observation. Where one peak originating from the object of interest under observation exists in the brightness histogram in this way, the minimum and maximum brightness values of the histogram correspond to the minimum and maximum brightness values, respectively, of the peak arising from the object of interest under observation. Therefore, as shown in FIG. 3A, the object of interest under observation can be clearly confirmed by adjusting the contrast while relating the minimum and maximum brightness values of the brightness histogram to the minimum and maximum brightness values on the display device.

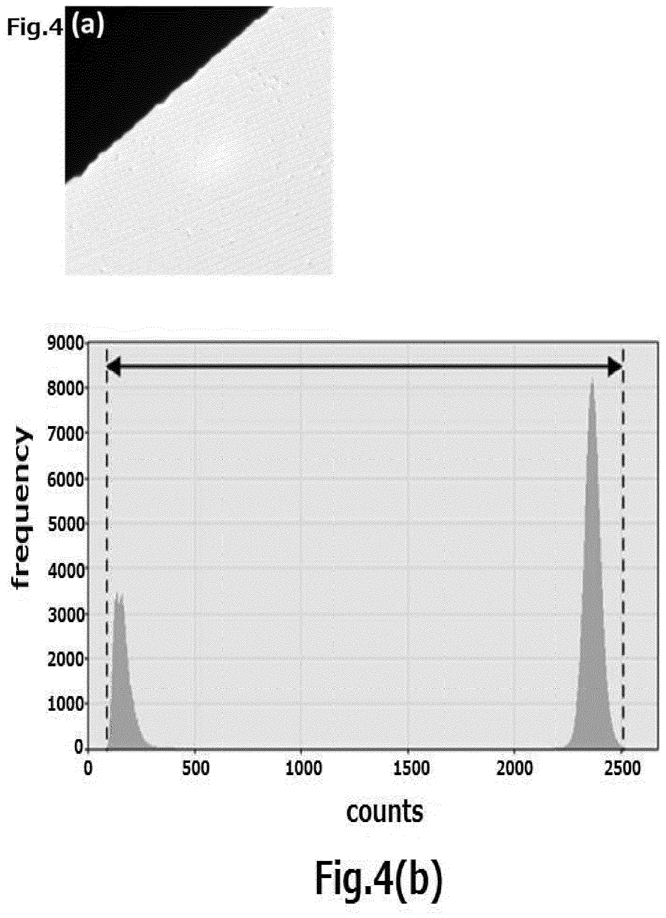

FIG. 4A is a TEM image having a field of view containing the object of interest under observation and a structure (sample holding grid) other than the object of interest. The TEM image of FIG. 4A has been taken by moving the field of view of the TEM image of FIG. 3A. In the TEM image shown in FIG. 4A, the contrast has been adjusted while relating the minimum and maximum brightness values of the brightness histogram to the minimum and maximum brightness values of the display device in the same way as for the TEM image of FIG. 3A. FIG. 4B shows a brightness histogram of the TEM image of FIG. 4A. The area between the broken lines of the brightness histogram of FIG. 4B corresponds to the contrast of the display device (i.e., the contrast of the TEM image of FIG. 4A).

In the TEM image of FIG. 4A, the object of interest under observation is displayed with lower contrast than in the TEM image of FIG. 3A and, therefore, the grid-like pattern and many black points that are clearly discernible in the TEM image of FIG. 3A cannot be easily noticed, for the following reason. The brightness histogram shown in FIG. 4B contains both a peak having a brightness value close to 100 counts and arising from the sample holding grid and a peak having a brightness value close to 2,250 counts and arising from the object of interest under observation. In this case, it follows that the minimum brightness value of the brightness histogram corresponds to the minimum brightness value of the peak arising from the sample holding grid and that the maximum brightness value of the histogram corresponds to the maximum brightness value of the peak arising from the object of interest under observation. Therefore, if the contrast is adjusted while relating the minimum and maximum brightness values of the brightness histogram to the minimum and maximum brightness values on the display device, the object of interest under observation will be displayed with low contrast.

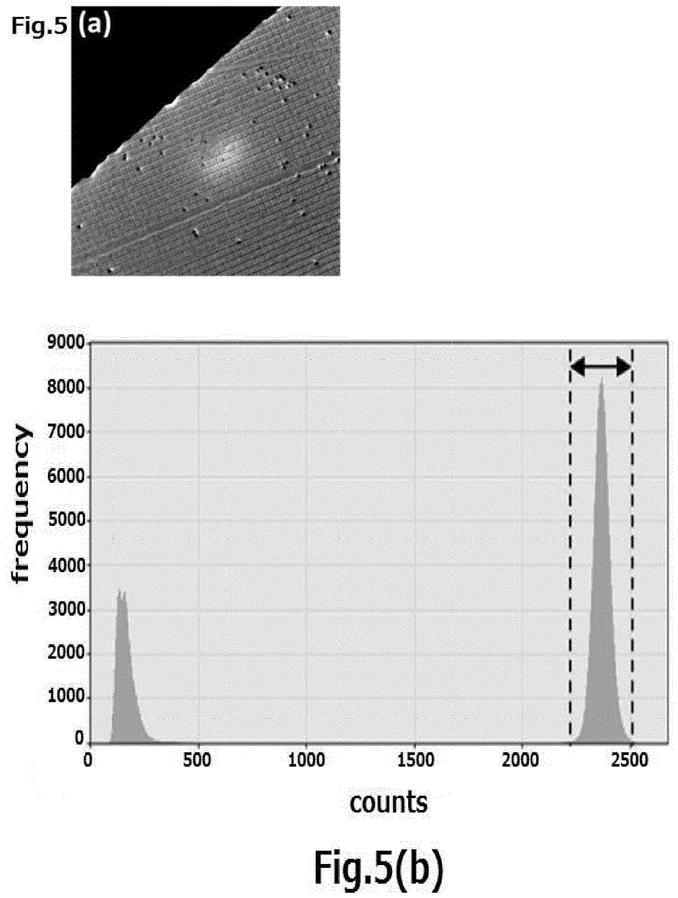

FIG. 5A is a TEM image having the same field of view as that of the TEM image of FIG. 4A. In the TEM image of FIG. 5A, the contrast has been adjusted while relating the minimum and maximum brightness values of the peak arising from the object of interest under observation to the minimum and maximum brightness values on the display device. FIG. 5B shows a brightness histogram of the TEM image of FIG. 5A. The region between the broken lines of the brightness histogram shown in FIG. 5B corresponds to the contrast on the display device (contrast of the TEM image of FIG. 5A).

In the TEM image shown in FIG. 5A, the contrast has been adjusted while taking notice of only the peak arising from the object of interest under observation and located at a position close to 2,250 counts after excluding peaks at peak positions less than 500 counts. That is, the contrast has been adjusted while relating the minimum and maximum brightness values originating from the object of interest under observation to the minimum and maximum brightness values on the display device. As a result, as shown in FIG. 5A, a grid-like pattern and many black points can be clearly noticed in the same way as for the TEM image shown in FIG. 3A.

When the contrast of the TEM image shown in FIG. 5A was adjusted, image processing was performed by the image processing method associated with the present embodiment. The processing time from the instant when the brightness histogram of the TEM image shown in FIG. 5A was obtained to the instant when the processing for adjusting the contrast ended was 3 msec, which can cope amply with high frame rates of CMOS cameras on the order of 100 fps.

Similar experiments were conducted on samples different from the sample which produced the TEM images of FIGS. 3A-5A.

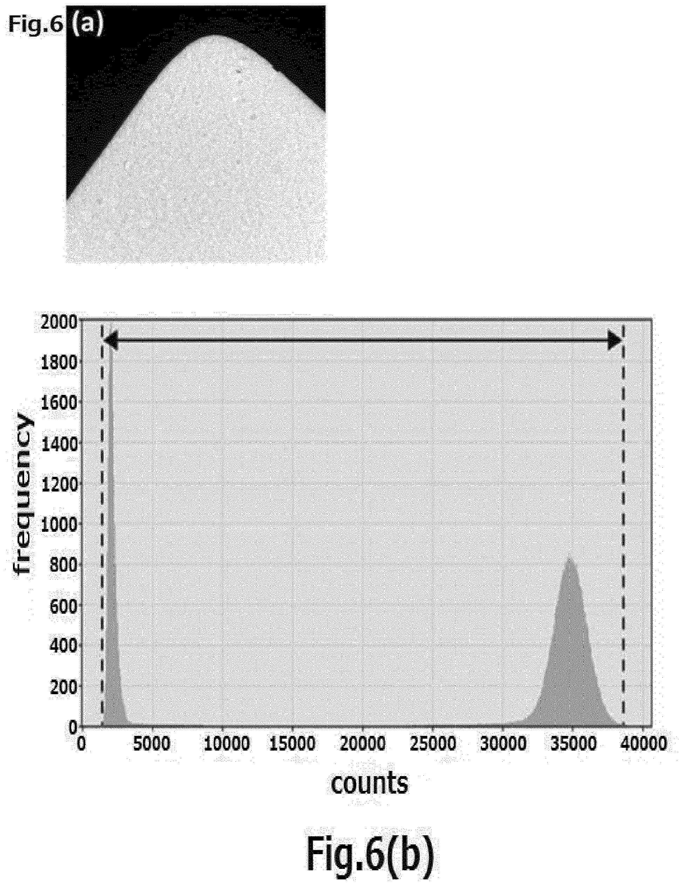

FIG. 6A is a TEM image having a field of view that contains both an object of interest under observation and a structure (sample holding grid) other than the object under observation. In the TEM image of FIG. 6A, the contrast was adjusted while relating the minimum and maximum brightness values of a brightness histogram to the minimum and maximum brightness values on the display device. FIG. 6B is a brightness histogram of the TEM image of FIG. 6A. The area between the broken lines of the brightness histogram of FIG. 6B corresponds to the contrast on the display device (the contrast of the TEM image of FIG. 6A).

In the brightness histogram shown in FIG. 6B, there exist a peak having a peak position close to 35,000 counts and arising from an object of interest under observation and a peak having a peak position close to 2,000 counts and arising from the sample holding grid. In the TEM image of FIG. 6A, the object of interest under observation is shown with low contrast. Furthermore, in the TEM image of FIG. 6A, the peak arising from the object of interest under observation has a peak position of about 35,000 counts, indicating the presence of an intense input signal (large brightness value).

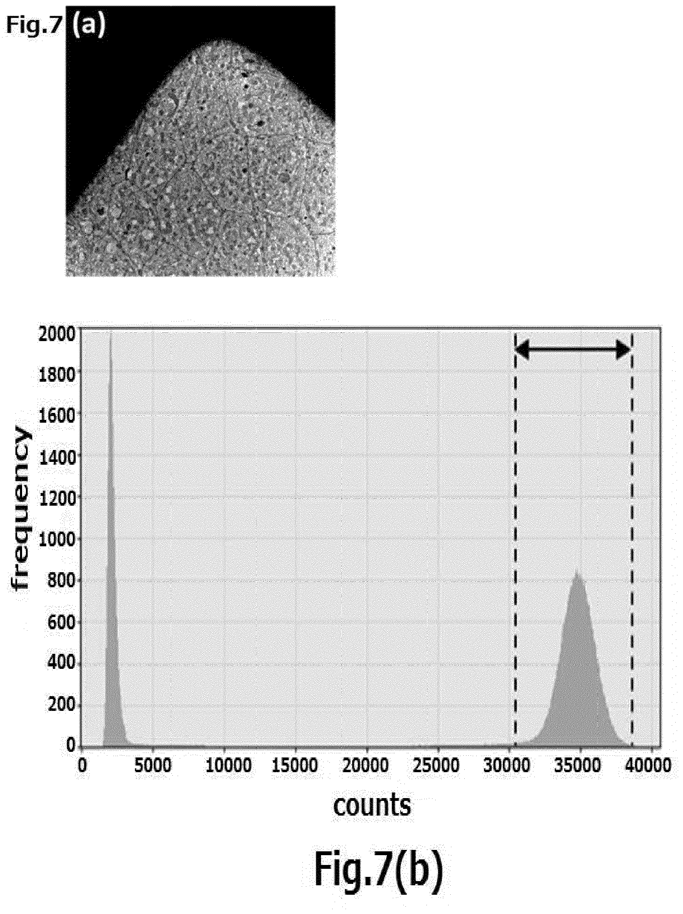

FIG. 7A is a TEM image having the same field of view as that of the TEM image of FIG. 6A. In the TEM image of FIG. 7A, the contrast has been adjusted while relating the minimum and maximum brightness values of the peak arising from the object of interest under observation to the minimum and maximum brightness values on the display device. FIG. 7B is a brightness histogram of the TEM image of FIG. 7A. The area between the broken lines of the brightness histogram of FIG. 7B corresponds to the contrast on the display device (contrast of the TEM image shown in FIG. 7A).

In the TEM image shown in FIG. 7A, the contrast has been adjusted while taking notice of only the peak arising from the object of interest under observation and located at a peak position close to 35,000 counts after excluding peaks having peak positions less than 5,000 counts. That is, the contrast has been adjusted while relating the minimum and maximum brightness values of the peak arising from the object of interest under observation to the minimum and maximum brightness values on the display device. As a result, as shown in FIG. 7A, the object of interest under observation can be clearly noticed.

When the contrast of the TEM image shown in FIG. 7A was adjusted, image processing was effected by the image processing method associated with the present embodiment. A coefficient K for excluding the peak arising from the sample holding grid was set to 0.2 (K = 0.2).

In the TEM image shown in FIG. 7A, the maximum brightness value of the brightness histogram is 40,000. Assuming K = 0.2, the threshold value is 8,000. Accordingly, the peak arising from the sample holding grid can be removed from the brightness histogram of FIG. 7A.

In the above-described TEM image shown in FIG. 5A, the maximum brightness value of the brightness histogram is 25,000. Assuming that K = 0.2, the threshold value is 500. Therefore, the peak arising from the sample holding grid can be excluded from the brightness histogram shown in FIG. 5B.

By setting the coefficient K for presetting the threshold value in this way, the threshold value for excluding the peak arising from the sample holding grid can be set appropriately if the intensity of the input signal (i.e., the maximum brightness value of the brightness histogram) is different.

In the TEM image shown in FIG. 7A, the brightness histogram has a large maximum brightness value of 40,000. Therefore, an operation for combining any two adjacent bins of the brightness histogram of FIG. 7B into one bin was repeated three times, thus binning the histogram. As a result, the number of bins (elements) of the brightness histogram of FIG. 7B could be reduced to 5,000. Thus, the processing speed could be improved. In particular, the processing time from the instant when the histogram of the TEM image of FIG. 7A to the end of the adjustment of the contrast was 5 msec, which can cope amply with high frame rates of CMOS cameras on the order of 100 fps.

### 4. Modification

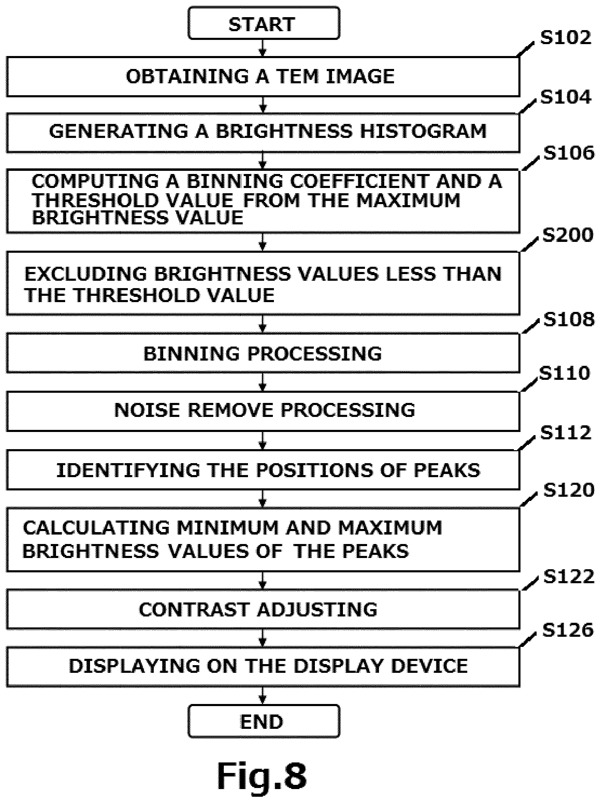

A modification of the image processing performed in the image processor associated with the present embodiment is next described by referring to FIGS. 1 and 8. The image processor associated with the present modification is similar in configuration to the image processor 100 shown in FIG. 1 and thus its description and illustration is omitted. FIG. 8 is a flowchart illustrating an example of the modification of the image processing performed in the image processor associated with the present embodiment. Those steps of the flowchart of FIG. 8 which are identical to their respective counterparts of the flowchart of FIG. 2 are indicated by the same reference numerals as in FIG. 2 and their description is omitted.

In the above embodiment, as illustrated in FIG. 2, after performing the processing sequence of steps S108-S116, subthreshold peaks found by step S106 are excluded. Consequently, peaks arising from structures and morphologies other than the object under observation are excluded from the brightness histogram (step S118).

On the other hand, in the present modification, as illustrated in FIG. 8, after the step S106 in which the binning processing section 116 determines a binning coefficient and the contrast adjusting section 118 calculates a threshold value on the basis of the maximum brightness value of the TEM image, step S200 is performed. In this step S200, the contrast adjusting section 118 excludes brightness values less than the calculated threshold value from the brightness histogram. Image processing implemented by the image processor associated with the present modification is hereinafter described by referring to FIGS. 1 and 8.

First, the image acquisition section 112 obtains a TEM image captured by the electron microscope body 10 (step S102).

Then, the histogram generating section 114 generates a brightness histogram (step S104).

Then, the binning processing section 116 determines a binning coefficient from a maximum brightness value of the TEM image, and the contrast adjusting section 118 calculates a threshold value from the maximum brightness value of the TEM image, the threshold value being used to exclude peaks arising from structures and morphologies other than an object under observation (step S106).

The contrast adjusting section 118 excludes brightness values less than the threshold value calculated in step S106 from the brightness histogram (step S200). Consequently, the peaks arising from the structures other than the object of interest under observation can be removed.

The binning processing section 116 then bins the brightness histogram from which the subthreshold brightness values have been excluded, on the basis of the maximum brightness value of the TEM image (step S108).

The contrast adjusting section 118 then adjusts the contrast of the TEM image, on the basis of the binned brightness histogram (steps S108-S126).

First, the contrast adjusting section 118 performs processing to remove noise from the binned brightness histogram (step S110).

The contrast adjusting section 118 then performs processing to identify the positions of peaks present in the brightness histogram (step S112).

The contrast adjusting section 118 then calculates minimum and maximum brightness values of each identified peak (step S120) and adjusts the contrast of the TEM image (step S122).

The display controller 119 then provides control such that the TEM image whose contrast has been adjusted by the contrast adjusting section 118 is displayed on the display device 122 (step S126).

Because of the sequence of processing steps described so far, the TEM image captured by the electron microscope body 10 can be adjusted in terms of contrast and displayed on the display device 122.

In the image processor associated with the present modification, the contrast adjusting section 118 excludes from the brightness histogram those brightness values that are less than the threshold value calculated based on the maximum brightness value of the TEM image and adjusts the contrast of the TEM image on the basis of the brightness histogram from which the subthreshold brightness values have been excluded. Therefore, if the object under observation and structures and morphologies other than the object under observation all enter the field of view, the object under observation can be prevented from being displayed with low contrast. Consequently, the object under observation can be displayed with appropriate contrast.

Furthermore, the image processing method associated with the present modification comprises the steps of: obtaining a TEM image; generating a brightness histogram representative of a distribution of brighness values of pixels from the obtained TEM image; and excluding from the brightness histogram brightness values less than a threshold value calculated based on a maximum brightness value of the obtained TEM image and adjusting the contrast of the TEM image on the basis of the brightness histogram from which the subthreshold brightness values have been excluded. Therefore, if an object under observation and structures or morphologies all enter the field of view, the object under observation can be prevented from being shown with low contrast. As a result, the object under observation can be displayed with appropriate contrast.

It is to be understood that the present invention is not restricted to the above embodiments and that various changes and modifications may be made without departing from the scope of the appended claims. For example, in the above examples of the image processors associated with the above embodiment and modification, the image subjected to image processing is a TEM image, and the processing is facilitated by binning a brightness histogram of the TEM image. In the image processor associated with the present invention, the image subjected to image processing is not restricted to TEM images but rather can be various images which can be adjusted in terms of contrast using brightness histograms.

In addition, in the above examples of the image processors associated with the above embodiment and modification, the image subjected to image processing is a TEM image, and if the number of peaks present in the brightness histogram is two or more, peaks less than a threshold value calculated based on a maximum brightness value of the TEM image are excluded from the brightness histogram, and the contrast of the TEM image is adjusted. In the image processor associated with the present invention, the image subjected to image processing is not restricted to TEM images but rather any image containing a structure or morphology other than an object of interest under observation if the difference in brightness value between the object of interest and the undesired structure is relatively large and, at the same time, the object of interest and undesired structure both enter the field of view. Examples of such image include electron microscope images (such as scanning transmission electron (STEM) images and scanning electron microscope (SEM) images) and scanning ion microscope (SIM) images.

Additionally, in the above embodiments and modification, the electron microscope is a transmission electron microscope. The electron microscope associated with the present invention may be a scanning transmission electron microscope, a scanning electron microscope, or the like. Also, it may be a scanning ion microscope.

The present invention embraces configurations substantially identical (e.g., in function and method) with the configurations described in the embodiments of the invention. Furthermore, the invention embraces configurations described in the embodiments and including portions which have non-essential portions replaced. Further, the invention embraces configurations which are similar to the configurations described in the embodiments except that well-known techniques have been added.

## Claims

1. An image processor (100) comprising:
an image acquisition section (112) for obtaining a TEM image of a sample (2) held by a sample holding grid;
a histogram generating section (114) for generating from the image a histogram representative of a distribution of brightness values of pixels of the image; and
a contrast adjusting section (118) for excluding from the histogram subthreshold brightness values less than a threshold value calculated based on a maximum one of the brightness values of the image and adjusting the contrast of the image on the basis of the histogram from which the subthreshold brightness values have been excluded,
wherein said contrast adjusting section (118) calculates said threshold value by multiplying said maximum brightness value of the image by a given coefficient, and
wherein the given coefficient is set based on the ratio (P2/P1) of the brightness value (P2) of the peak arising from the sample holding grid to the brightness value (P1) of the peak arising from the sample.

2. An image processor (100) as set forth in claim 1, further comprising a binning processing section (116) for binning said histogram on the basis of said maximum brightness value of the image.

3. An electron microscope (1000) including an image processor (100) as set forth in any one of claims 1 to 2.

4. An image processing method, comprising the steps of:
obtaining a TEM image of a sample (2) held by a sample holding grid;
generating from the obtained image a histogram representative of a distribution of brightness values of pixels of the image; and
excluding from the histogram those brightness values that are less than a threshold value calculated based on a maximum one of the brightness values of the image to thereby produce a modified histogram and adjusting the contrast of the image on the basis of the modified histogram
calculating said threshold value by multiplying said maximum brightness value of the image by a given coefficient, wherein the given coefficient is set based on the ratio (P2/P1) of the brightness value (P2) of the peak arising from the sample holding grid to the brightness value (P1) of the peak arising from the sample.

## Patentansprüche

1. Bildprozessor (100), umfassend:
einen Bilderfassungsabschnitt (112) zum Erhalten eines TEM-Bildes einer von einem Probenhaltegitter gehaltenen Probe (2);
einen Histogramm-Erzeugungsabschnitt (114) zum Erzeugen eines für eine Verteilung der Helligkeitswerte von Pixeln des Bildes repräsentativen Histogramms aus dem Bild; und
einen Kontrasteinstellabschnitt (118) zum Ausschließen von Unterschwellen-Helligkeitswerten, die niedriger als ein Schwellenwert sind, der basierend auf einem maximalen der Helligkeitswerte des Bildes berechnet wurde, aus dem Histogramm und zum Einstellen des Kontrasts des Bildes basierend auf dem Histogramm, aus dem die Unterschwellen-Helligkeitswerte ausgeschlossen worden sind,
wobei der Kontrasteinstellabschnitt (118) den Schwellenwert berechnet, indem er den maximalen Helligkeitswert des Bildes mit einem gegebenen Koeffizienten multipliziert, und wobei der gegebene Koeffizient basierend auf dem Verhältnis (P2/P1) des Helligkeitswertes (P2) des sich aus dem Probenhalteraster ergebenden Peaks zu dem Helligkeitswert (P1) des sich aus der Probe ergebenden Peaks eingestellt wird.

2. Bildprozessor (100) nach Anspruch 1, ferner umfassend einen Binning-Verarbeitungsabschnitt (116) zum Binning des Histogramms auf der Grundlage des maximalen Helligkeitswertes des Bildes.

3. Elektronenmikroskop (1000) mit einem Bildprozessor (100) nach einem der Ansprüche 1 bis 2.

4. Bildverarbeitungsverfahren mit den Schritten:
Erhalten eines TEM-Bildes einer von einem Probenhaltegitter gehaltenen Probe (2);
Erzeugen eines für eine Verteilung der Helligkeitswerte von Pixeln des Bildes repräsentativen Histogramms aus dem erhaltenen Bild; und
Ausschließen der Helligkeitswerte, die kleiner als ein Schwellenwert sind, der basierend auf einem maximalen der Helligkeitswerte des Bildes berechnet wurde, um dadurch ein modifiziertes Histogramm zu erzeugen, und Einstellen des Kontrasts des Bildes auf der Grundlage des modifizierten Histogramms;
Berechnen des Schwellenwerts durch Multiplizieren des maximalen Helligkeitswertes des Bildes mit einem gegebenen Koeffizienten, wobei der gegebene Koeffizient basierend auf dem Verhältnis (P2/P1) des Helligkeitswertes (P2) des sich aus dem Probenhalteraster ergebenden Peaks zu dem Helligkeitswert (P1) des sich aus der Probe ergebenden Peaks eingestellt wird.

## Revendications

1. Processeur d'image (100) comprenant :
une section d'acquisition d'image (112) pour obtenir une image de Microscopie Électronique de Transmission « TEM » d'un échantillon (2) maintenu par une grille de maintien d'échantillon ;
une section de génération d'histogramme (114) pour générer à partir de l'image un histogramme représentant une distribution de valeurs de luminosité de pixels de l'image ; et
une section de réglage de contraste (118) pour exclure de l'histogramme des valeurs de luminosité sous seuil inférieures à une valeur seuil calculée sur la base d'une valeur maximale parmi les valeurs de luminosité de l'image et pour régler le contraste de l'image sur la base de l'histogramme à partir duquel les valeurs de luminosité sous-seuil ont été exclues,
dans lequel ladite section de réglage de contraste (118) calcule ladite valeur seuil en multipliant ladite valeur de luminosité maximale de l'image par un coefficient donné, et
dans lequel le coefficient donné est défini sur la base du rapport (P2/P1) de la valeur de luminosité (P2) du pic provenant de la grille de maintien d'échantillon sur la valeur de luminosité (P1) du pic provenant de l'échantillon.

2. Processeur d'image (100) selon la revendication 1, comprenant en outre une section de traitement de classification (116) pour classifier ledit histogramme sur la base de ladite valeur de luminosité maximale de l'image.

3. Microscope électronique (1000) comportant un processeur d'image (100) selon l'une quelconque des revendications 1 et 2.

4. Procédé de traitement d'image, comprenant les étapes consistant à :
obtenir une image TEM d'un échantillon (2) maintenu par une grille de maintien d'échantillon ;
générer à partir de l'image obtenue un histogramme représentant une distribution de valeurs de luminosité de pixels de l'image ; et
exclure de l'histogramme les valeurs de luminosité qui sont inférieures à une valeur seuil calculée sur la base d'une valeur maximale parmi les valeurs de luminosité de l'image afin de produire ainsi un histogramme modifié et régler le contraste de l'image sur la base de l'histogramme modifié,
calculer ladite valeur seuil en multipliant ladite valeur de luminosité maximale de l'image par un coefficient donné, où le coefficient donné est défini sur la base du rapport (P2/P1) de la valeur de luminosité (P2) du pic provenant de la grille de maintien d'échantillon sur la valeur de luminosité (P1) du pic provenant de l'échantillon.
